Europäisches Patentamt

European Patent Office

Office européen des brevets

(19)

(11) Publication number: **0 385 807**

**A1**

(12) **EUROPEAN PATENT APPLICATION**

(21) Application number: **90302272.1**

(51) Int. Cl.⁵: **G11B 33/04, A47B 81/06**

(22) Date of filing: **02.03.90**

(30) Priority: **03.03.89 GB 8904850**

(43) Date of publication of application:
**05.09.90 Bulletin 90/36**

(84) Designated Contracting States:
**AT BE CH DE DK ES FR GB GR IT LI LU NL SE**

(71) Applicant: **PATH GROUP PLC**
**Unit 15 Hayward Industrial Park, Tameside Drive**
**Castle Bromich, Birmingham B35 7BT(GB)**

(72) Inventor: **Heseltine, John Paul**
**Don Bosco, Nine Elms Marina, Kirtling Street**
**London SW8 5BP(GB)**

(74) Representative: **Bayliss, Geoffrey Cyril et al**
**BOULT, WADE & TENNANT 27 Furnival Street**
**London EC4A 1PQ(GB)**

(54) **A storage rack.**

(57) A storage rack (1) for compact disc cases (17) and the like comprising a set of mutually identical ribs (2,14,19), each rib having a plurality of rib connecting formations (4,10) formed unitarily with the rib, the rib connecting formations being arranged such that a first rib (2) extending horizontally in use is connectable in parallel spaced relationship to a second rib (14) to define a storage location (16) therebetween, any number of further ribs of the set being connectable side-by-side in like manner to form an assembly (20) of ribs and defining a corresponding number of further storage locations, at least some of the rib connecting formations between adjacent ribs constituting means (15) supporting a case within the respective storage location, the rack further comprising a set of mutually identical spacing members (23), each spacing member having spaced apart end portions (25,32) and each end portion having an associated connection means for connection to a respective rib whereby in use a plurality of rib assemblies may be connected in parallel spaced relationship by means of spacing members extending therebetween. The rack can be assembled in a variety of different configurations allowing multiple rows of storage locations to be provided in a convenient and stylish manner.

FIG 1

EP 0 385 807 A1

# A STORAGE RACK

This invention relates to storage racks for compact disc cases and the like.

It is known to store compact discs in slender rectangular faced cases of rectangular cross-section and generally formed of transparent plastics material. It is an object of the present invention to provide a storage rack having storage locations for such cases and for the rack to be assemblable from modular elements so as to provide any required number of such locations.

The present invention also has application to storage of other like cases such as larger cases for multiple compact disc compilations, the cases of tape casettes and other such media used for recording audio signals, video signals or computer software.

According to the present invention there is disclosed a storage rack for compact disc cases and the like comprising a set of mutually identical ribs, each rib having a plurality of rib connecting formations formed unitarily with the rib, the rib connecting formations being arranged such that a first rib extending horizontally in use is connectable in parallel spaced relationship to a second rib to define a storage location therebetween, any number of further ribs of the set being connectable side-by-side in like manner to form an assembly of ribs and defining a corresponding number of further storage locations, at least some of the rib connecting formations between adjacent ribs constituting means supporting a case within the respective storage location, the rack further comprising a set of mutually identical spacing members, each spacing member having spaced apart end portions and each end portion having an associated connection means for connection to a respective rib whereby in use a plurality of rib assemblies may be connected in parallel spaced relationship by means of spacing members extending therebetween.

Preferably each rib comprises a plate which in use is oriented with substantially vertical plane side faces, and wherein the connecting formations comprise a first array of spigots projecting from one side face of the plate, a second array of spigots projecting from the other side face of the plate, the first array of spigots of one rib being arranged to abut the second array of spigots of an adjacent rib and there being provided male and female push fit connectors operable between abutting spigots, and wherein the first and second arrays each include a horizontal row of spigots adjacent the lower edge of the plate such that the abutting rows of spigots connected between adjacent ribs form a row of three or more support members upon which a case is supportable in use.

The first and second arrays may include further spigots at each end of the plate and spaced above the row of support members such that the abutting further spigots connected between adjacent ribs form stop members for limiting longitudinal movement of a case supported on the support members.

The connection means of each spacing member may be cooperable with the rib connecting formations whereby in use spacing members are connectable to the exposed rib connecting formations of an assembly of ribs.

Preferably the connection means comprises both male and female push fit connectors disposed on opposite sides respectively of the spacing member.

Advantageously the connection means comprises, at each end of the spacing member and on each side thereof, a respective group of three connectors whose relative positions correspond to the apices of an equilateral triangle and wherein the rib connecting formations include groups of three connectors in corresponding triangular array such that a spacing member may be connected to a rib at any one of three orientations relative to the rib.

The spacing members may be of cruciform cross-section.

The rack may include further sets of interconnectable ribs and spacing members co-operating in like manner to those of the first set so as to define further storage locations of different dimensions.

The storage locations defined by the set of ribs may be dimensioned to accommodate compact disc cases and the storage locations defined by the further ribs may be dimensioned to accommodate audio cassette cases.

According to a further aspect of the present invention there is disclosed a method of assembling a storage rack for compact disc cases and the like comprising a set of mutually identical ribs, each rib having a plurality of rib connecting formations formed unitarily with the rib, the rib connecting formations being arranged such that a first rib extending horizontally in use is connected in a first step of the method in parallel spaced relationship to a second rib to define a storage location therebetween, any number of further ribs of the set then being connectable side-by-side in like manner to form an assembly of ribs and defining a corresponding number of further storage locations, at least some of the rib connecting formations between adjacent ribs constituting means supporting a case within the respective storage location, first step of the method being repeated to form at least one further assembly, the rack further comprising a set of mutually identical spacing members, each spacing member having spaced apart end portions and each end portion having an associated connection means for connection to a respective rib, the method including the further step of connecting the rib assemblies in parallel spaced relationship by means of spacing members extending therebetween.

Particular embodiments of the present invention will now be described by way of example only and with reference to the accompanying drawings of which:

Figure 1 is a partly exploded perspective view of a storage rack for compact discs;

Figure 2 is a side elevation of a rib of the rack of Figure 1;

Figure 3 is a plan view of the rib of Figure 2;

Figure 4 is a side view of a spacing member of the rack of Figure 1;

Figure 5 is a further view of the upright member of Figure 4;

Figure 6 is a side elevation of a further rib of a size suitable for a storage rack for audio cassettes;

Figure 7 is a plan view of the rib of Figure 6;

Figure 8 is a side view of a further spacing member for use with the rib of Figures 6 and 7;

Figure 9 is a further view of the spacing member of Figure 8 viewed in the direction IX; and

Figure 10 is an end elevation of a storage rack for compact discs assembled from ribs and spacing members of the type shown in Figures 2 to 5 and including spacing members oriented at 30° to the horizontal.

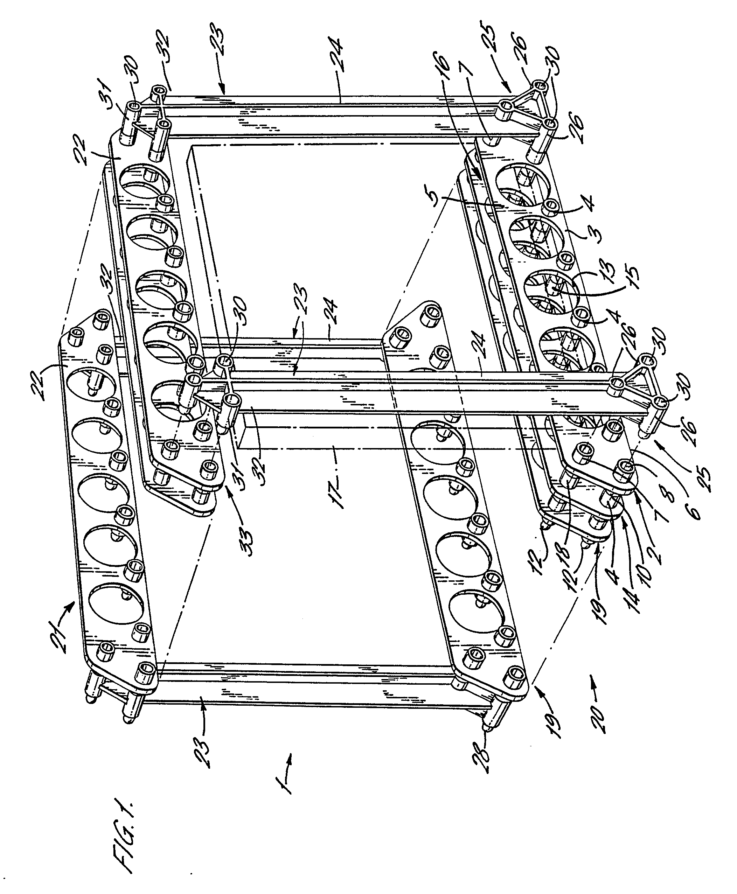

In Figure 1 a storage rack 1 has a first rib 2 extending horizontally on a supporting surface in the form of an elongate plate 3. An array of spigots 4 project horizontally from a vertical first face 5 of the plate 3, the spigots being arranged to form a horizontal row adjacent the lower edge 6 of the first face. At each end of the plate additional further spigots 7 are located above the row of lower spigots 4 such that at each end of the plate there is provided a group of spigots whose relative positions correspond to the apices of an equilateral triangle.

Each of the spigots 4 and 7 is provided with a cylindrical recess 8.

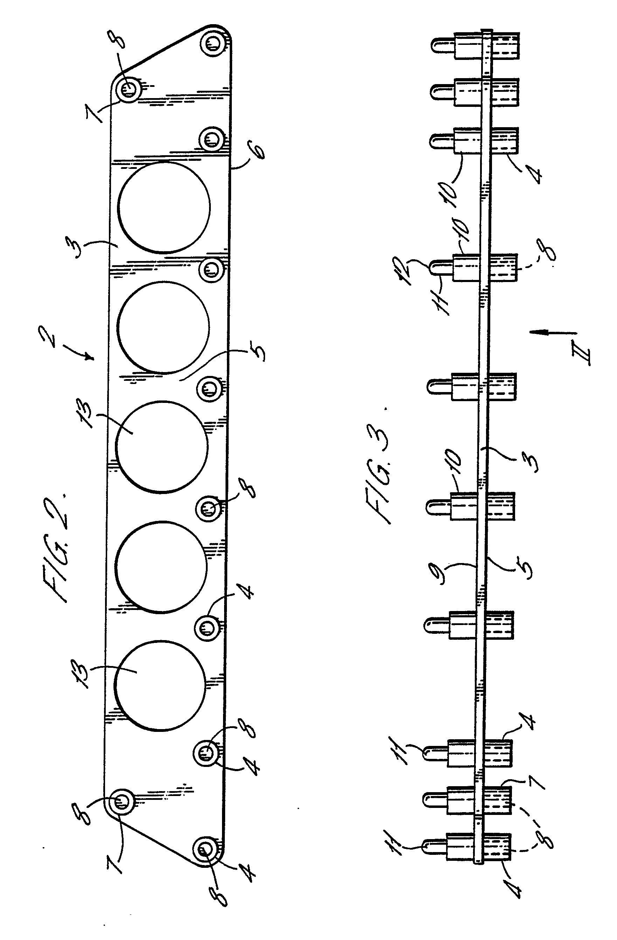

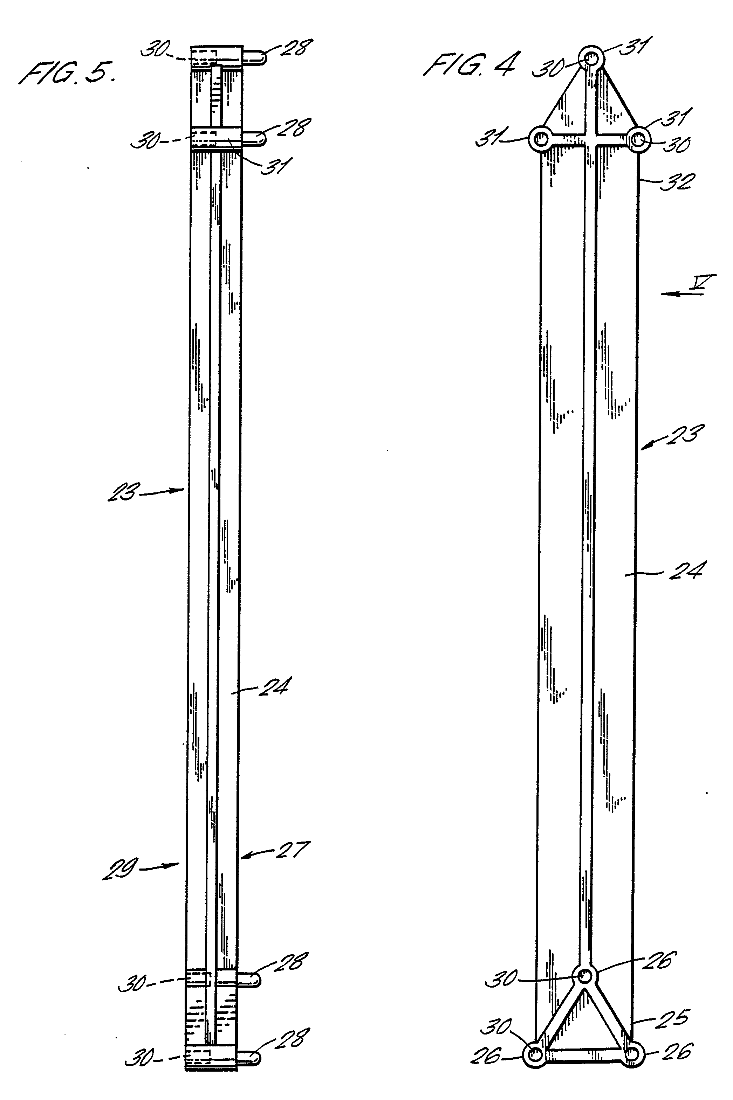

As shown in Figure 3 the plate 3 has a second face 9 from which project an array of spigots 10 arranged such that for each of the spigots 4 of the first face 5 there is a corresponding spigot 10 of the second face which extends from the plate coaxially in the opposite direction. Each of the second face spigots 10 is provided with an axially extending cylindrical projection 11, each having a rounded tip 12. The projections 11 are dimensioned such that a projection 11 would be accommodated as an interference fit within a recess 8.

The first rib 2 is provided with a row of apertures 13 of larger diameter than the spigots 4 and positioned between adjacent spigots along the length of the plate.

A second rib 14 as shown in Figure 1 is formed so as to have an identical shape and size to the first rib 2 and corresponding reference numerals are used to describe features of the second rib where appropriate.

The second rib 14 is connected to the first rib 2 by means of push fit connectors constituted by the projections 11 of the first rib locating within the cylindrical recesses 8 of the second rib such that corresponding spigots 4 and 10 abut to define cylindrical support members 15. The respective plates 3 of the first and second ribs 2 and 14 are thereby maintained in parallel spaced relationship by the cylindrical support members 15.

A first storage location 16 is defined between the first and second ribs 2 and 14 and a compact disc case shown in dotted lines at 17 is locatable within the first storage location such that its lower end face extends horizontally and is supported in contact with a horizontal row of support members 15 formed by the abutting horizontal row of spigots 4.

The further spigots 7 abut to form stop members 18 which limit longitudinal movement of the case with respect to the ribs. The case 17 is received as a sliding fit in the channel defined by the first and second faces 5 and 9 of the second and first ribs 4 and 2 respectively.

A number of further ribs 19 of identical shape and size to the first and second ribs 2 and 14 are connected in like manner such that a horizontally extending first assembly 20 is formed in which a row of compact disc cases can be stored. Where the cases include a label or other marking on one of its rectangular side faces then these labelled faces are arranged vertically so as to be visible from the front of the rack.

A second assembly 21 of identical ribs 22 is also shown in Figure 1 and is connected to the first assembly 20 by means of spacing members 23 such that the second assembly extends parallel to and vertically spaced above the first assembly.

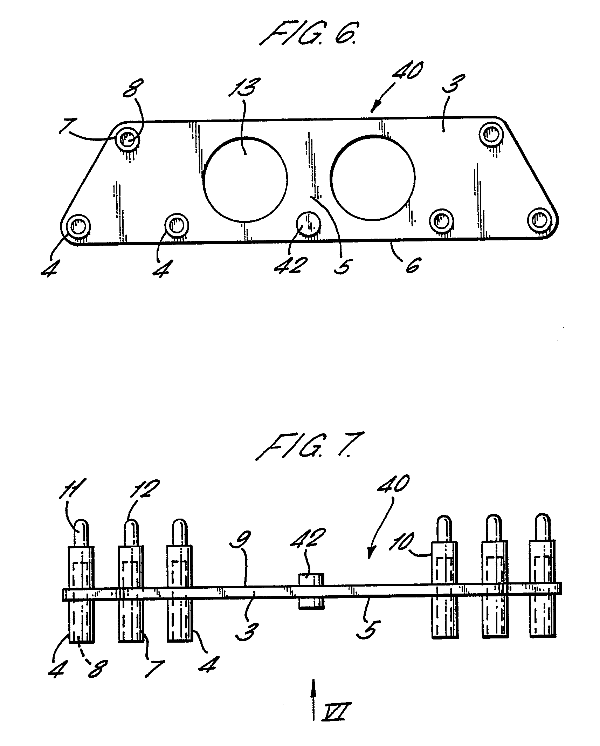

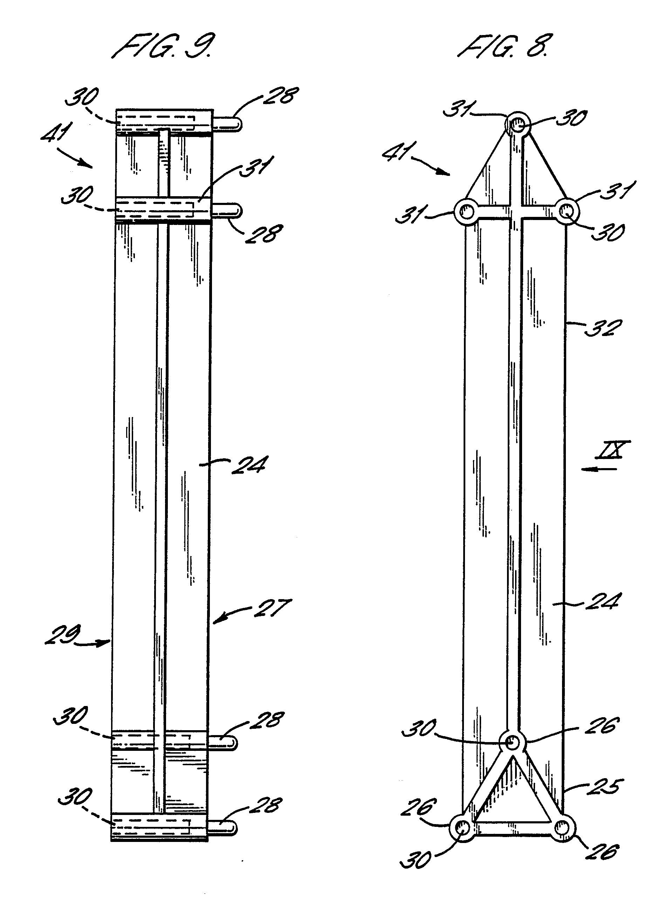

Each spacing member 23 as shown in more detail in Figures 4 and 5 comprises an elongate strut 24 of cruciform cross-section. At the lower end 25 of the strut 24 the spacing member 23 is provided with means for connection to the end rib (i.e. the first rib 2) of the first assembly 20, the connection means comprising an array of three spigots 26 arranged such that in axial view the relative positions of the spigots correspond to the triangular array of spigots 4, 7 at each end of the first rib.

On one side 27 of the spacing member 23 the spigots 26 are provided with cylindrical projections 28 which are an interference fit within the cylindrical recesses 8 of the end rib 2. On the other side 29 of the spacing member 23 the opposite ends of the spigots 26 are provided with axially arranged cylindrical recesses 30. A similar array of spigots 31 is provided at the upper end 32 of the upright member and corresponding reference numbers are used where appropriate.

The upper ends 32 of the spacing members 23 are similarly connected to the end rib 33 of the second assembly 21. At the opposite end of each assembly 20 and 21 connection is made between further spacing members 23 and the end ribs by location of the projections 11 of the end rib within the recesses 30 of the spacing member 23.

In order to place a case in a storage location of the lower first assembly 20 it is necessary to move the case horizontally at a height which clears the stop member 18 after which the case can be lowered into contact with the support members 15 so as to be located between the two stop members 18. It is therefore necessary to provide sufficient vertical clearance between the first and second assemblies for this to occur and consequently the length of the upright members 23 must be selected accordingly.

Any number of storage locations can be provided by adding further ribs as required. Additional tiers of rib assemblies can be added by connecting further identical spacing members 23 such that the lower end of the further spacing member is connected to the upper end of an existing spacing member or sandwiched between ribs of the second assembly i.e. in place of an existing rib. In this way tiers of different length may be added to provide an elegant rack structure in a variety of shapes.

For stability it would generally be necessary to support each tier with two spacing members 23 at each end. Further pairs of spacing members can be interposed part-way along the length of a rib assembly where excessively long assemblies are used in order to avoid sagging of the upper assemblies.

The spacing members 23 may alternatively be connected at an angle of 30 degrees to ribs in order to provide tiers which were offset horizontally from one another. Referring to Figure 1, if the spacing members 23 are disconnected and turned anti-clockwise through 120 degrees they can be reconnected to the ribs so as to extend upwardly at 30 degrees to the horizontal. An example of how a storage rack can be assembled so as to include spacing members 23 oriented at 30° to the horizontal is shown in Figure 10 where corresponding reference numerals to those of the preceding Figures are used where appropriate for corresponding elements.

In Figure 10 a rack 50 includes a first assembly 51 of ribs 2 above which a second assembly 52 is supported by vertically extending spacing members 23. The first assembly 51 defines storage locations for a first row of compact discs 53 and the second assembly 52 defines storage locations for a second row of compact discs 54.

A third assembly 55 of ribs 2 is supported at a location above and to the right of the second assembly 52 by means of spacing members 23 which extend at 30° to the horizontal. The third assembly 55 defines storage locations for a third row of compact discs 56. A fourth assembly 57 is located below and to the right of the third assembly 55 and is connected to the third assembly by spacing members 23 which are inclined at 30° to the horizontal. The fourth assembly 57 defines storage locations for a fourth set of compact discs 58. A fifth assembly 59 is located vertically beneath the fourth assembly 58 and is connected by vertically extending spacing members 23. The fifth assembly 59 defines storage locations for a fifth row of compact discs 60.

It will be apparent that many different geometrical shapes can be generated by connecting assemblies of ribs with suitably oriented spacing members.

The above examples have been described with reference to a compact disc case in which the length of the support members is determined by the thickness of the case. Where such a rack is to be used for cases of alternative thickness then the dimensions of the support members 15 must be suitably adapted together with the longitudinal separation of the stop members 18 and the height of the upright members 23. By suitable choice of dimensions other cases such as those of double compact discs or audio cassettes can be accommodated.

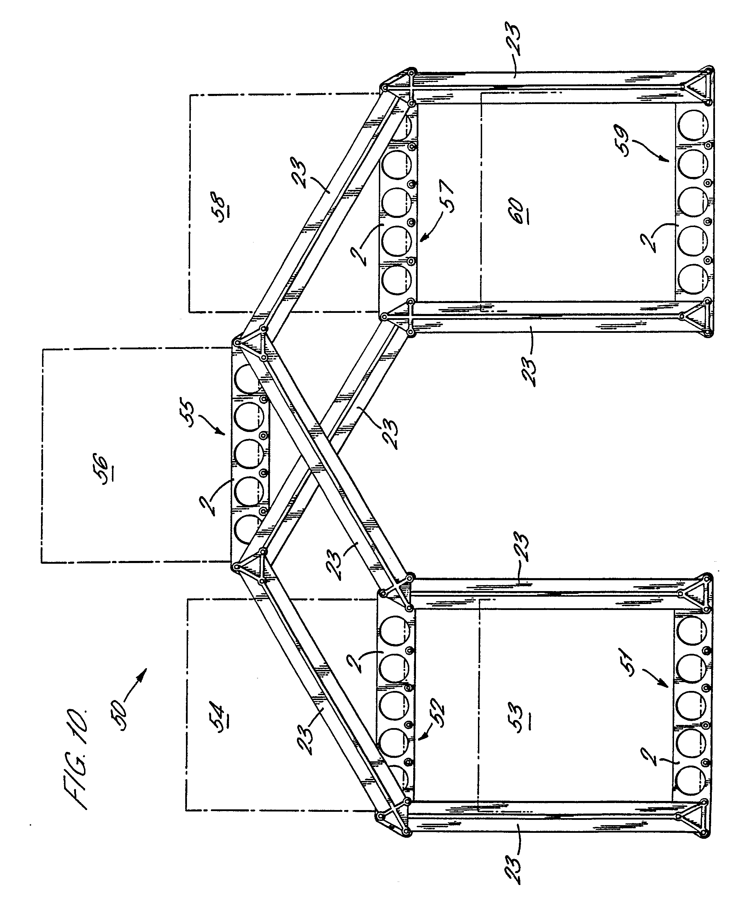

By way of example Figures 6 to 9 illustrate a modified rib 40 and a modified spacing member 41 which are suitable for use in a storage rack for audio cassette cases. The modified rib and modified spacing member 41 differ primarily from the rib 2 and spacing member 23 in that they are of shorter length but are otherwise of similar characteristics and are described with reference to corresponding reference numerals to those used in Figures 1 to 5 where appropriate for corresponding features.

First and second assemblies (not shown) of modified ribs 40 can be connected by means of the modified spacing members 41 to form a rack for audio cassette cases similar to the rack 1 shown in Figure 1 but having a different height and depth. The modified rib 40 includes spigots 4, 7, 10 provided with projections 11 and recesses 8 which can if required be connected to the spigots 4, 7, 10 of the rib 2 of Figure 1 or to the spigots 26 of the spacing member 23 of Figure 1. In this way a rack 1 for compact disc cases can be connected to a rack for audio cassette tape cases.

As illustrated in Figures 6 and 7 the modified rib 40 includes a stud 42 projecting on each side of the plate 3 at a location adjacent the mid-point of the lower edge 6. The stud 42 provides additional support to a cassette case which in use rests on the spigots 4.

The above arrangements provide infinite flexibility in building such storage racks which can be extended both horizontally and vertically using just two basic components i.e. the ribs and spacing members. The components are readily mouldable from a suitable plastics material such as polypropylene.

The projections and recesses may alternatively be other than cylindrical such as cruciform in cross section. Connection between spacing members may be snap fitting if required. Alternatively the connecting formations operable between ribs may be other than push fit connectors and may for example be sliding fit connectors operable by relative longitudinal movement of the ribs or relative vertical movement.

The spacing members 23 may be other than of cruciform cross section and may be for example of cylindrical cross section.

**Claims**

1. A storage rack (1) for compact disc cases (17) and the like comprising a set of mutually identical ribs (2,14,19), each rib having a plurality of rib connecting formations (4,10) formed unitarily with the rib, the rib connecting formations being arranged such that a first rib (2) extending horizontally in use is connectable in parallel spaced relationship to a second rib (14) to define a storage location (16) therebetween, any number of further ribs (19) of the set being connectable side-by-side in like manner to form an assembly (20) of ribs and defining a corresponding number of further storage locations, at least some of the rib connecting formations between adjacent ribs constituting means (15) supporting a case within the respective storage location, characterised by the rack further comprising a set of mutually identical spacing members (23), each spacing member having spaced apart end portions (25,32) and each end portion having an associated connection means (26) for connection to a respective rib whereby in use a plurality of rib assemblies may be connected in parallel spaced relationship by means of spacing members extending therebetween.

2. A rack as claimed in claim 1 wherein each rib comprises a plate (3) which in use is oriented with substantially vertical plane side faces (5,9), and wherein the connecting formations comprise a first array of spigots (4) projecting from one side face (5) of the plate, a second array of spigots (10) projecting from the other side face (9) of the plate, the first array of spigots of one rib (2) being arranged to abut the second array of spigots of an adjacent rib (14) and there being provided male and female push fit connectors (12,8) operable between abutting spigots, and wherein the first and second arrays each include a horizontal row of spigots adjacent the lower edge (6) of the plate such that the abutting rows of spigots connected between adjacent ribs form a row of three or more support members (15) upon which a case is supportable in use.

3. A rack as claimed in claim 2 wherein the first and second arrays include further spigots (7) at each end of the plate and spaced above the row of support members (15) such that the abutting further spigots connected between adjacent ribs form stop members for limiting longitudinal movement of a case supported on the support members.

4. A rack as claimed in any preceding claim wherein the connection means of each spacing member are co-operable with the rib connecting formations whereby in use spacing members are connectable to the exposed rib connecting formations of an assembly of ribs.

5. A rack as claimed in claim 4 wherein the connection means comprises both male and female push fit connectors (28,30) disposed on opposite sides respectively of the spacing member.

6. A rack as claimed in claim 5 wherein the connection means comprises, at each end of the spacing member and on each side thereof, a respective group of three connectors whose relative positions correspond to the apices of an equilateral triangle and wherein the rib connecting formations include groups of three connectors in corresponding triangular array such that a spacing member may be connected to a rib at any one of three orientations relative to the rib.

7. A rack as claimed in any preceding claim wherein the spacing members are of cruciform cross-section.

8. A rack as claimed in any preceding claim including further sets of interconnectable ribs (40) and spacing members (41) co-operating in like manner to those of the first set so as to define further storage locations of different dimensions.

9. A rack as claimed in claim 8 wherein the storage locations defined by the set of ribs are dimensioned to accommodate compact disc cases and the storage locations defined by the further ribs are dimensioned to accommodate audio cassette cases.

10. A method of assembling a storage rack (1) for compact disc cases (17) and the like comprising a set of mutually identical ribs (2,14,19), each rib having a plurality of rib connecting formations (4,10) formed unitarily with the rib, the rib connecting formations being arranged such that a first rib (2) extending horizontally in use is connected in a first step of the method in parallel spaced relationship to a second rib (14) to define a storage location therebetween, any number of further ribs (19) of the set then being connectable side-by-side in like manner to form an assembly (20) of ribs and defining a corresponding number of further storage locations, at least some of the rib connecting formations between adjacent ribs constituting means (15) supporting a case within the respective storage location, characterised by the first step of the method being repeated to form at least one further assembly, the rack further comprising a set of mutually identical spacing members (23), each spacing member having spaced apart end portions (25,32) and each end portion having an associated connection means (26) for connection to a respective rib, the method including the further step of connecting the rib assemblies in parallel spaced relationship by means of spacing members extending therebetween.

FIG.1.

EP 0 385 807 A1

FIG. 2.

FIG. 3.

FIG. 5.

FIG. 4

FIG. 6.

FIG. 7.

FIG. 9.

FIG. 8.

FIG. 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 038 334 (STAHLHOF BREUNINGER) <br> * Whole document * <br> --- | 1-10 | G 11 B 33/04 <br> A 47 B 81/06 |
| A | GB-A-1 584 157 (FLYNN) <br> * Whole document * <br> --- | 1-10 | |
| A | DE-A-1 910 552 (SCHWEIZER) <br> * Whole document * <br> --- | 1-10 | |
| A | EP-A-0 051 856 (OLYMPUS) <br> * Figure 15 * <br> ----- | 1-10 | |

TECHNICAL FIELDS SEARCHED (Int. Cl.5)

A 47 B
G 11 B

The present search report has been drawn up for all claims

| Place of search | Date of completion of the search | Examiner |
|---|---|---|
| THE HAGUE | 06-06-1990 | DE GROOT R.K. |